# EUROPEAN PATENT APPLICATION

(11) **EP 4 738 054 A1**
(43) Date of publication of application: **06.05.2026**
(21) Application number: 25204249.4
(22) Date of filing: 24.09.2025
(51) Int. Cl.: G06F 1/16, G06F 1/183

(54) **ELECTRONIC APPARATUS AND FIXING STRUCTURE**

(30) Priority: 29.10.2024 JP 2024189731
(71) Applicant: Lenovo (Singapore) Pte. Ltd., Singapore 556741 (SG)
(72) Inventor: SUGISAWA, Kazutoshi, Yokohama-shi, 220-0012 (JP); SUZUKI, Kenji, Kawasaki, 212-0000 (JP); TAKIZAWA, Hiroshi, Kawasaki, 212-0000 (JP)
(74) Representative: Openshaw & Co.

(57) **Abstract**

Provided are an electronic apparatus and a fixing structure that facilitate easy handling of a screw for fixing an electronic module to a substrate.

A fixing structure fixes a communication module to a substrate, and includes a bracket that is provided along an edge portion forming one end of the communication module, a screw that is rotatably provided on the bracket and configured to fix an end part of the communication module to the substrate, and a sheet that protrudes from the bracket to a side opposite to the communication module. Terminal blocks are formed along the edge portion of the communication module, detachable shielded wires are connected to the terminal blocks, and the sheet is transparent and has identification symbols that are able to be matched with the shielded wires at positions overlapping the shielded wires.

## Description

### BACKGROUND OF THE INVENTION

### Field of the Invention

The present invention relates to an electronic apparatus including a substrate and an electronic module fixed to the substrate, and a fixing structure for fixing the electronic module to the substrate.

### Description of the Related Art

In an electronic apparatus such as a laptop PC, a detachable electronic module may be provided on a substrate. An electronic module in an electronic apparatus disclosed in Japanese Patent No. 7531669 has one end connected to a connector mounted on a substrate, and the other end fixed to the substrate with a screw. Such an electronic module is replaceable by removing the screw.

### SUMMARY OF THE INVENTION

Incidentally, since the screw used for such fixation is small, it is difficult to handle the screw in a narrow area inside a chassis.

The present invention has been made in view of the above-described problem, and an object of the present invention is to provide an electronic apparatus and a fixing structure that facilitate easy handling of a screw for fixing an electronic module to a substrate.

In order to solve the above-mentioned problem and achieve the object, an electronic apparatus according to a first aspect of the present invention includes: a substrate; and an electronic module fixed to the substrate, in which the electronic apparatus has a bracket that is provided along an edge portion forming one end of the electronic module, a screw that is rotatably provided on the bracket and configured to fix the edge portion of the electronic module to the substrate, and a sheet that protrudes from the bracket to a side opposite to the electronic module.

A fixing structure according to a second aspect of the present invention fixes an electronic module to a substrate, the fixing structure including: a bracket that is provided along an edge portion forming one end of the electronic module; a screw that is rotatably provided on the bracket and configured to fix the edge portion of the electronic module to the substrate; and a sheet that protrudes from the bracket to a side opposite to the electronic module.

The above-described aspects of the present invention facilitate easy handling of the screw for fixing the electronic module to the substrate.

### BRIEF DESCRIPTION OF THE DRAWINGS

FIG. 1 is a top view of an electronic apparatus according to an embodiment.
FIG. 2 is a bottom view schematically illustrating an internal structure of a chassis.
FIG. 3 is an exploded perspective view of a portion of a fixing structure in the electronic apparatus.
FIG. 4 is a perspective view of a fixing part and its peripheral portion in the fixing structure, as viewed obliquely from above.
FIG. 5 is an exploded perspective view of the fixing part.
FIG. 6 is a partially enlarged perspective view of the fixing part as viewed obliquely from below.
FIG. 7 is a cross-sectional side view of the fixing part and its peripheral portion in the fixing structure.
FIG. 8 is a plan view of the fixing part in the fixing structure.
FIG. 9 is a perspective view of a fixing part according to a second example.
FIG. 10 is an exploded perspective view of the fixing part according to the second example.
FIG. 11 is a perspective view of a fixing part according to a third example.
FIG. 12 is an exploded perspective view of the fixing part according to the third example.
FIG. 13 is a perspective view of a fixing part according to a fourth example.
FIG. 14 is an exploded perspective view of the fixing part according to the fourth example.

### DETAILED DESCRIPTION OF THE INVENTION

Hereinafter, an embodiment of an electronic apparatus according to the present invention will be described in detail with reference to the drawings. The present invention is not limited to this embodiment.

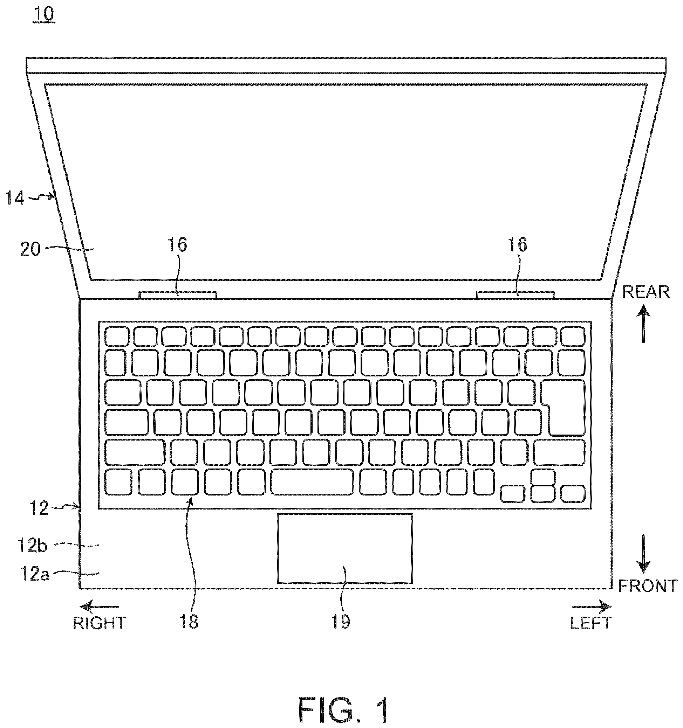

FIG. 1 is a top view of an electronic apparatus 10 according to an embodiment. As illustrated in FIG. 1, the electronic apparatus 10 includes a chassis 12, a display chassis 14, and hinges 16. The electronic apparatus 10 according to the present embodiment is a clamshell-type laptop PC in which the chassis 12 and the display chassis 14 are connected by the hinges 16 so as to be rotatable relative to each other. The present invention can be applied to various information devices other than the laptop PC, such as a desktop PC, a tablet PC, a mobile phone, a smartphone, a portable game machine, and an electronic organizer.

The chassis 12 is a flat box-shaped chassis. The chassis 12 is composed of a cover material 12a on an operation surface side and a cover material (conductive cover) 12b on a bottom surface side. The cover material 12a forms an upper surface and four side surfaces of the chassis 12. The cover material 12b is a lid plate that closes an opening on a lower surface side of the cover material 12a, and forms a lower surface of the chassis 12. The cover material 12b in this example is made of a material such as metal or is provided with a conductive paint or a conductive sheet on its inner surface, and has conductivity as a whole. When the electronic apparatus 10 is assembled, the cover material 12b is in electrical conduction with the ground of a substrate 21. A keyboard 18 and a touch pad 19 are provided on the upper surface of the chassis 12. In the following description, directions are defined with reference to a fixing structure 30 described below, and a side of the cover material 12b is defined as the top and a side of the cover material 12a is defined as the bottom, which is the reverse of a state in which the chassis 12 is normally placed during use. The same applies to a left-right direction. As for the front and rear, a side closer to a user who uses the electronic apparatus 10 is defined as the front, and a side farther away is defined as the rear.

The display chassis 14 is a flat box-shaped chassis that is thinner than the chassis 12. A display 20 is provided on a front surface of the display chassis 14. The display 20 is, for example, a liquid crystal display. The hinges 16 connect a rear edge portion of the chassis 12 and a lower edge portion of the display chassis 14. The hinges 16 are provided in pair, for example, on the left and right.

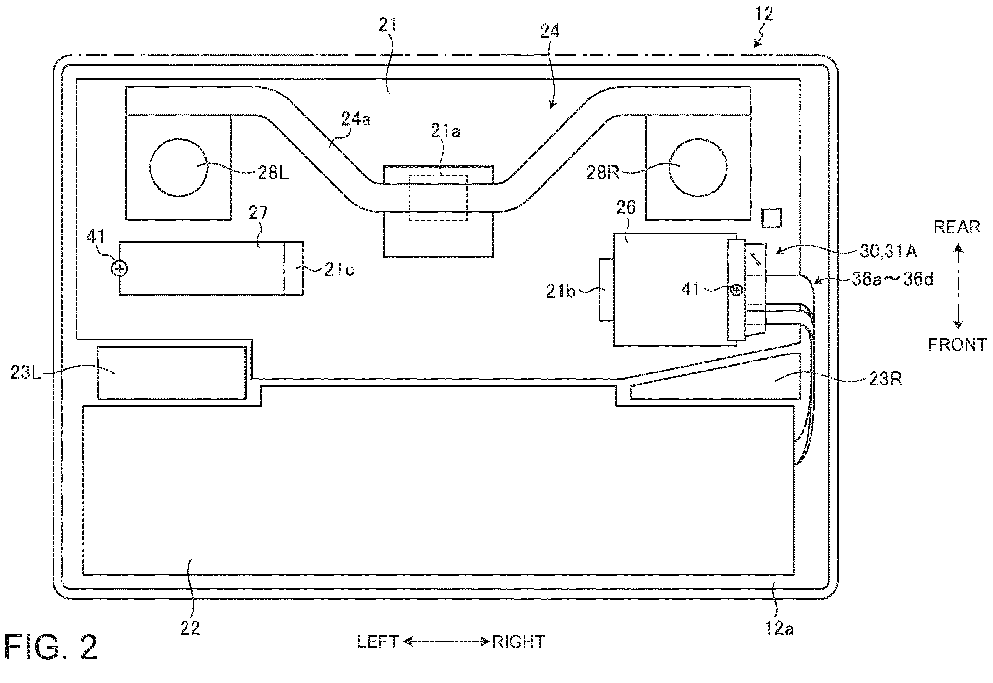

FIG. 2 is a bottom view schematically illustrating an internal structure of the chassis 12. As illustrated in FIG. 2, a substrate 21, a battery device 22, right and left speakers 23R and 23L, a cooling module 24, and various electronic components and mechanical components are housed inside the chassis 12 and are covered with the cover materials 12a and 12b.

The substrate 21 is a main substrate of the electronic apparatus 10 and occupies substantially the rear half of the chassis 12, and has electronic components such as a CPU 21a, connectors 21b and 21c, and the like mounted thereon. The CPU 21a controls the entirety of the electronic apparatus 10. The substrate 21 is further provided with a communication module (electronic module) 26, a storage module (electronic module) 27, and the like via the connectors 21b and 21c. The communication module 26 is, for example, a wireless wide area network (WWAN) module compatible with 5G. The storage module 27 is, for example, a solid state drive (SSD). The communication module 26 has a rectangular shape that is slightly elongated in a lateral direction. The storage module 27 has a rectangular shape that is further elongated in the lateral direction. The communication module 26 and the storage module 27 may be replaced for the purpose of improving performance or the like.

The battery device 22 is a secondary battery that serves as a power source of the electronic apparatus 10 and occupies substantially the front half of the chassis 12. The speakers 23R and 23L are disposed in a space secured between the substrate 21 and the battery device 22 at positions spaced apart from each other on the left and right sides in the chassis 12. The cooling module 24 cools a heat-generating component such as the CPU 21a, and has fans 28R and 28L disposed to be spaced apart from each other on the left and right sides and a heat pipe 24a that receives heat from the CPU 21a and transports the heat to the fan 28. The communication module 26 is provided between the speaker 23R and the fan 28R. The storage module 27 is provided between the speaker 23L and the fan 28L. The fans 28R and 28L are relatively large to secure heat dissipation performance. The speakers 23R and 23L are relatively large to improve sound quality. Therefore, there is little spatial margin between the speaker 23 and the fan 28, and, also due to a relationship with other mounted components, the communication module 26 and the storage module 27 are disposed in a relatively narrow area.

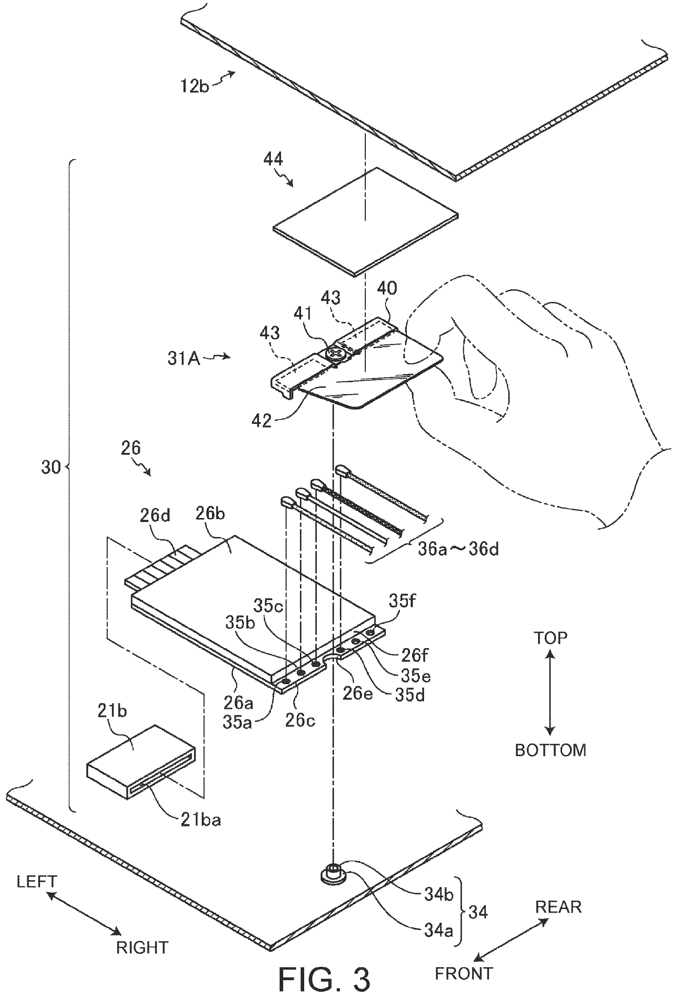

FIG. 3 is an exploded perspective view of a portion of the fixing structure 30 in the electronic apparatus 10. The fixing structure 30 fixes the communication module 26 to the substrate 21, and includes a fixing part 31A, a boss 34, and the connector 21b.

The connector 21b is a type of card edge type socket, is mounted on an upper surface of the substrate 21, and has a slot 21ba formed on the right. The boss 34 is adapted to fix the communication module 26, and is located at a position slightly away from the right as viewed from the connector 21b. The boss 34 has a stepped cylindrical shape consisting of a base portion 34a and a protruding portion 34b. A female screw is formed in a hollow portion of the protruding portion 34b.

The communication module 26 has a structure in which a flat module chassis 26b is provided on an upper surface of a module substrate 26a. The module substrate 26a and the module chassis 26b have the same front-rear width. The module substrate 26a has a slightly longer lateral width than the module chassis 26b, and a portion protruding to the right forms a terminal plate 26c, and a portion protruding to the left forms a connection terminal 26d. The connection terminal 26d is inserted into the slot 21ba of the connector 21b. A semicircular notch 26e into which the protruding portion 34b of the boss 34 fits is provided at the center of the terminal plate 26c in a front-rear direction. A peripheral portion of the semicircular notch 26e in the terminal plate 26c is placed on the base portion 34a of the boss 34.

On the terminal plate 26c, a total of six terminal blocks 35a, 35b, 35c, 35d, 35e, and 35f are formed in this order on both sides of the semicircular notch 26e, three terminal blocks on each side. Detachable shielded wires (electric wires) are connected to two or more of a plurality of terminal blocks. In this case, a shielded wire 36a is connected to the terminal block 35a, a shielded wire 36b is connected to the terminal block 35b, a shielded wire 36c is connected to the terminal block 35c, and a shielded wire 36d is connected to the terminal block 35d. The shielded wires 36a to 36d have head portions 37 connected to the terminal blocks 35a to 35d and extend in the right direction. In this case, since no electric wires are connected to the terminal blocks 35e and 35f, the electric wires may be omitted.

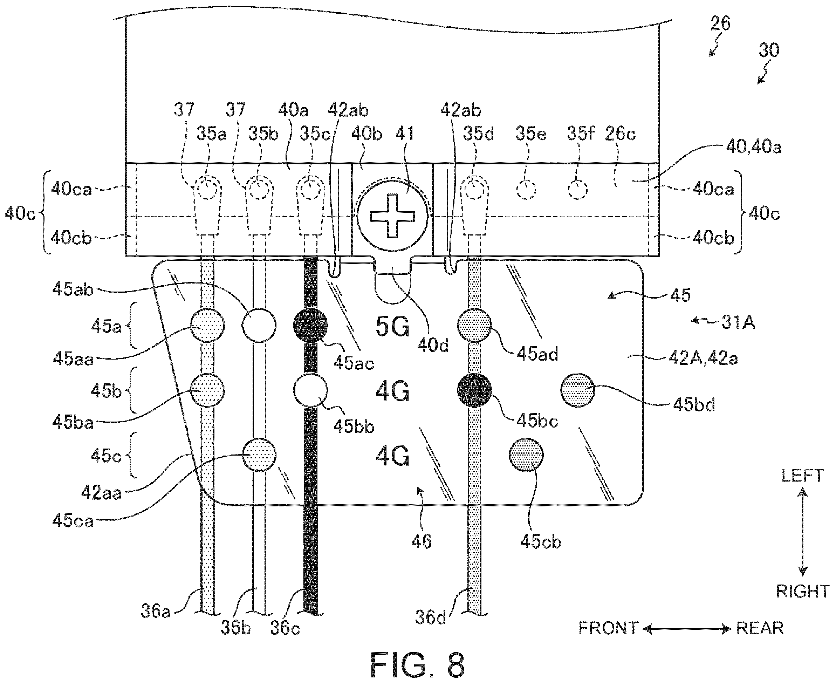

The shielded wires 36a to 36d each have a signal conductor at its axial center, a shield provided via an insulating material, and a sheath covering the periphery of the shield. In addition, the head portions 37 of the shielded wires 36a to 36d that are connected to the terminal blocks 35a, 35b, 35c, and 35d are exposed, and are in electrical conduction with the shield. The shielded wire 36a is colored yellow, the shielded wire 36b is colored white, the shielded wire 36c is colored black, and the shielded wire 36d is colored blue. In FIGS. 3 and 8, a light dotted pattern indicates yellow, an outline indicates white, a solid fill indicates black, and a dense dotted pattern indicates blue.

The fixing part 31A will be described.

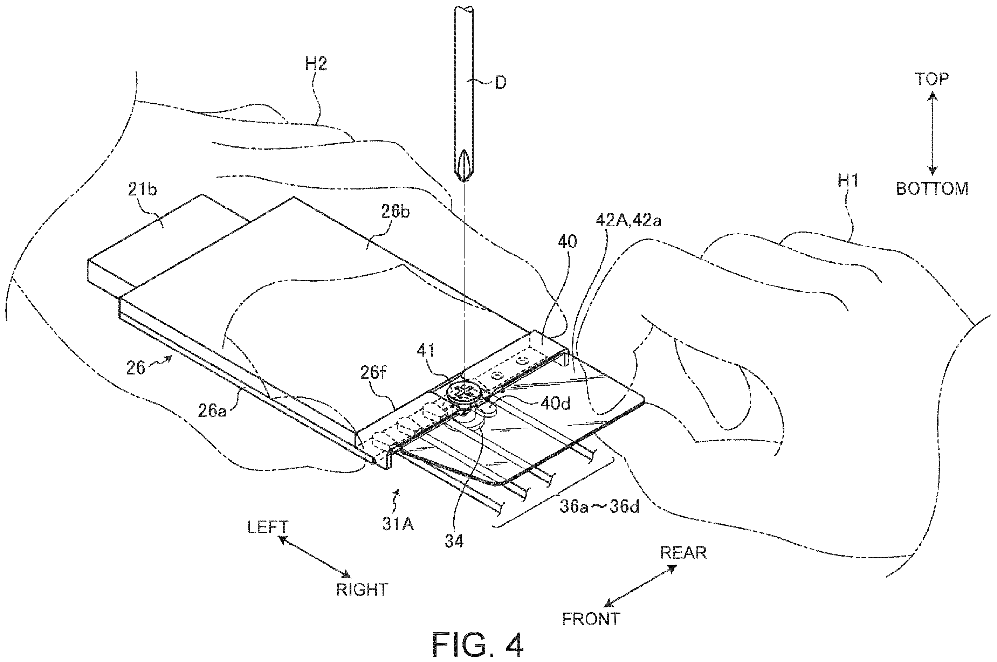

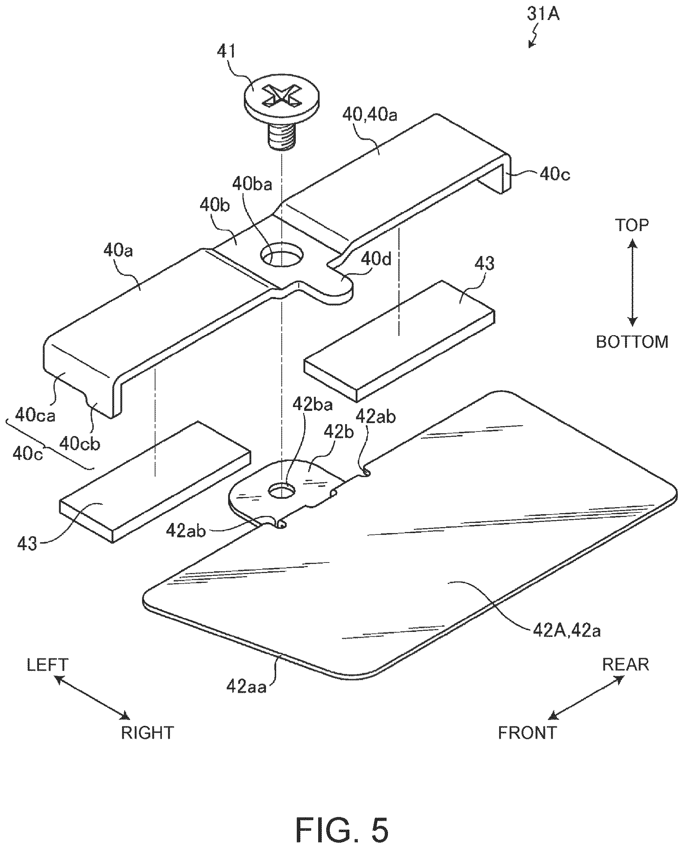

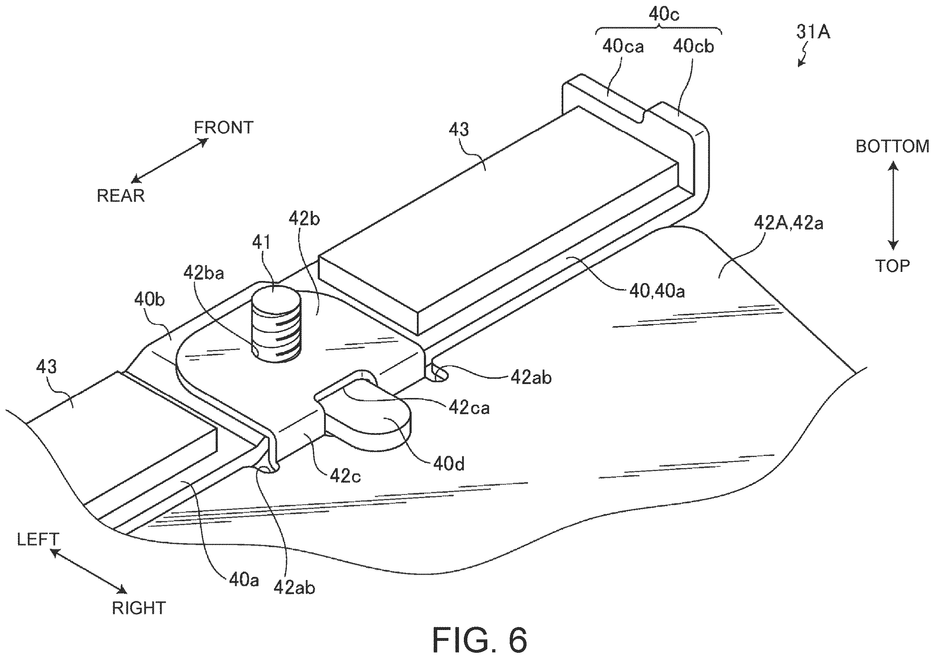

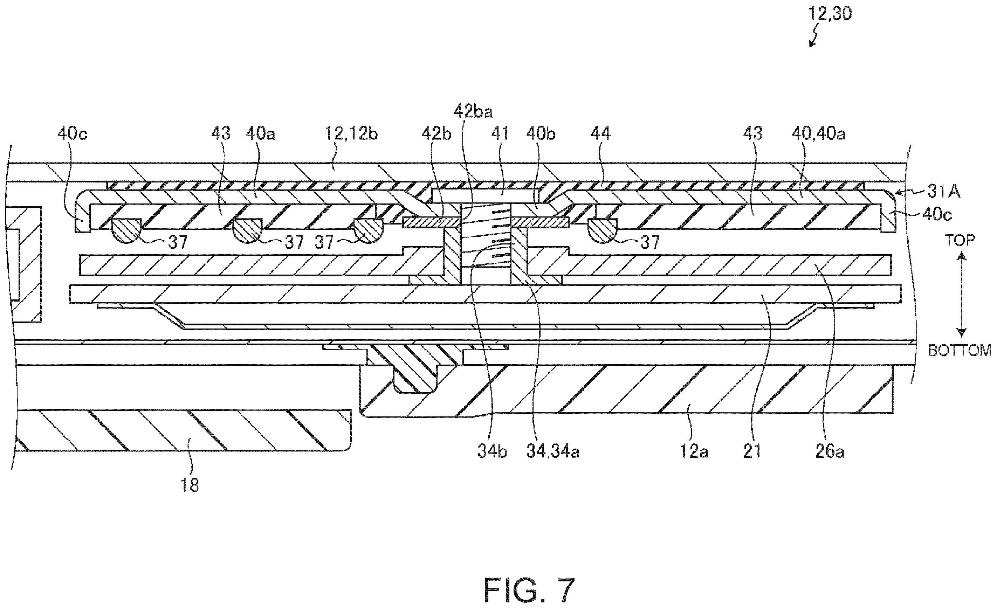

FIG. 4 is a perspective view of the fixing part 31A and its peripheral portion in the fixing structure 30, as viewed obliquely from above. FIG. 5 is an exploded perspective view of the fixing part 31A. FIG. 6 is a partially enlarged perspective view of the fixing part 31A as viewed obliquely from below. FIG. 7 is a cross-sectional side view of the fixing part 31A and its peripheral portion in the fixing structure 30.

The fixing part 31A has a bracket 40 that is provided along an edge portion 26f forming one end of the communication module 26, a screw 41 that fixes the terminal plate 26c, which is an end part of the communication module 26, to the substrate 21, a flexible sheet 42A that protrudes from the bracket 40 to the right, and two thin conductive sponges (first conductive elastic bodies) 43. A size of the screw 41 is, for example, M2.0, and because it is small, manual gripping and handling require a certain level of skill.

The bracket 40 has an elongated plate shape in the front-rear direction as a whole, and has two flat portions 40a, a recessed portion 40b formed between the two flat portions 40a, bent portions 40c that protrude downward on both sides in the front-rear direction, and a small protruding piece 40d that protrudes to the right from the recessed portion 40b. The bracket 40 is made of, for example, a metal plate such as stainless steel (conductive material) having a plate thickness of about 0.6 mm, and has sufficient strength. The bracket 40 and the communication module 26 have the same front-rear width.

One of the flat portions 40a covers the terminal blocks 35a to 35c, and the other covers the terminal blocks 35d to 35f. The recessed portion 40b has a substantially square shape and is slightly lower than the flat portion 40a. A screw hole 40ba into which the screw 41 is inserted is formed at the center of the recessed portion 40b. The screw hole 40ba has a larger diameter than a threaded portion of the screw 41, and the screw 41 inserted therethrough is rotatable.

The bent portions 40c are each divided into a terminal plate placement portion 40ca on the left and a protruding portion 40cb on the right. The terminal plate placement portions 40ca are portions that are placed on front and rear edges of the terminal plate 26c, and have the same left-right width as the terminal block 35c. The terminal plate placement portion 40ca has an appropriate height so that the flat portion 40a does not directly contact the head portion 37 connected to the terminal block 35c. The protruding portions 40cb slightly protrude downward from the terminal plate placement portions 40ca and abut on right end surfaces of the terminal plate 26c on the front and rear to prevent the bracket 40 from rotating.

The sheet 42A is made of a flexible thin resin material and has a gripping portion 42a and a connecting portion 42b. The gripping portion 42a protrudes from the bracket 40 to the right, that is, to a side opposite to the communication module 26. The gripping portion 42a is formed to have a left-right width that is sufficient for being grasped by a hand (see a hand H1 illustrated by a virtual line in FIG. 4), and is, for example, about 15 mm. A front-rear width of the gripping portion 42a is slightly smaller than that of the bracket 40. A gentle inclination 42aa for avoiding interference with the speaker 23R (see FIG. 2) is formed on a front edge of the gripping portion 42a. Small notches 42ab are formed at a front-rear boundary between the gripping portion 42a and the connecting portion 42b, making an area between the gripping portion 42a and the connecting portion 42b easier to bend.

The connecting portion 42b is a portion that is connected to the bracket 40, and protrudes toward the left from the center of the gripping portion 42a in the front-rear direction via a small stepped portion 42c having a crank shape and abuts on a lower surface of the recessed portion 40b. A step of the stepped portion 42c and a depth of the recessed portion 40b are substantially the same, and the gripping portion 42a is set to the same height as the flat portion 40a. A small rotation-preventing hole 42ca having a rectangular shape is formed in the stepped portion 42c, and the protruding piece 40d fits into the rotation-preventing hole 42ca. The rotation-preventing hole 42ca is sized so that the protruding piece 40d fits thereinto. Since the sheet 42A is fixed to the bracket 40 by the screw 41 at the connecting portion 42b, the screw 41 by itself would otherwise serve as the center of rotation; however, the protruding piece 40d fits into the rotation-preventing hole 42ca, thereby preventing relative rotation. In a case where a rotational force is applied to the sheet 42A, the sheet 42A may be temporarily bent to some extent. Even in a case where the sheet 42A is bent to a certain extent, the protruding piece 40d is fitted deeply enough into the rotation-preventing hole 42ca, so that the protruding piece 40d is not disengaged and returns to its original state when the rotational force is released. Therefore, it is easy to handle even for an operator who lack experience.

The connecting portion 42b and the recessed portion 40b have substantially the same shape. A screw hole 42ba is formed at the center of the connecting portion 42b. An externally threaded portion of the screw 41 is in a state of being screwed into the screw hole 42ba of the connecting portion 42b. A pilot hole for forming the screw hole 42ba is formed to have a slightly smaller diameter than the externally threaded portion of the screw 41, so that, when the screw is screwed, the externally threaded portion taps into the pilot hole and remains in a biting state. Therefore, the sheet 42A does not essentially fall off from the bracket 40 and the screw 41; in other words, the connecting portion 42b holds the screw 41 against the bracket 40 so that the screw 41 cannot fall off. The structure for preventing the screw 41 from falling off is not limited to this.

The conductive sponge 43 has substantially the same shape as the flat portion 40a in plan view, and is fixed to a lower surface of the flat portion 40a with a conductive pressure-sensitive adhesive material. The conductive sponge 43 is in elastic contact with each of the head portions 37. A conductive sponge (second conductive elastic body) 44 is provided on an inner surface of the cover material 12b (see FIGS. 2 and 7) and is in elastic contact with the bracket 40. Therefore, the head portion 37 is in elastic conduction with the cover material 12b via the conductive sponge 43, the bracket 40, and the conductive sponge 44, and the shielding function of the shielded wires 36a to 36d is exhibited.

The recessed portion 40b has several functions. Due to the presence of the recessed portion 40b, the flat portion 40a is positioned relatively high, and a space for interposing the conductive sponge 43 is secured without interfering with the head portion 37. The recessed portion 40b allows a head portion of the screw 41 to be placed at a lower position than the flat portion 40a. The recessed portion 40b functions as a washer for the screw 41. The recessed portion 40b corresponds to the stepped portion 42c of the sheet 42A, and the protruding piece 40d that protrudes from the recessed portion 40b in the right direction fits into the rotation-preventing hole 42ca of the stepped portion 42c to exhibit a rotation-preventing action.

FIG. 8 is a plan view of the fixing part 31A in the fixing structure 30. The gripping portion 42a of the sheet 42A is transparent (including translucent), so that positions and colors of the shielded wires 36a to 36d below the gripping portion 42a are visible. The gripping portion 42a is marked with identification symbols 45 that are able to be matched with the shielded wires 36a to 36d at positions overlapping the shielded wires. In accordance with a type of the communication module 26, the identification symbols 45 are provided in a plurality of rows (three rows in this case) together with a symbol 46 indicating the type.

As the type of the communication module 26, a distinction is made between 5G and 4G. The communication module 26 of this example is compatible with 5G, and an upper row 45a marked with "5G" as the symbol 46 corresponds to 5G. In the upper row 45a, an identification symbol 45aa corresponding to the shielded wire 36a, an identification symbol 45ab corresponding to the shielded wire 36b, an identification symbol 45ac corresponding to the shielded wire 36c, and an identification symbol 45ad corresponding to the shielded wire 36d are marked with a circle mark of the same color at a position overlapping each shielded wire. That is, by means of their respective colors, the identification symbols 45 enable matching and identifying the corresponding shielded wires, thereby preventing connection errors and facilitating visual inspection.

A middle row 45b and a lower row 45c are each marked with "4G" as the symbol 46, which reflects specification differences such as an applicable country. The middle row 45b is intended for a specification for a country using four shielded wires, and four identification symbols 45ba, 45bb, 45bc, and 45bd are marked at positions overlapping the respective corresponding shielded wires. The lower row 45c is intended for a specification for a country using two shielded wires, and two identification symbols 45ca and 45cb are marked at positions overlapping the respective corresponding shielded wires. The method of matching the shielded wire using the identification symbol 45 is not limited to color and may be patterns or characters (for example, a character such as "white"). The gripping portion 42a has an appropriate width for gripping, and the identification symbols 45 can be provided in about three rows.

In such an electronic apparatus 10 and such a fixing structure 30, the bracket 40 is provided along the edge portion 26f of the communication module 26, and therefore has a certain length and size, so that there is no risk of its being lost in a narrow area inside the chassis 12. Furthermore, the screw 41 for fixing the communication module 26 to the substrate 21 is provided on the bracket 40 so that the screw 41 cannot fall off, and thus there is likewise no risk of its being lost.

The sheet 42A having an appropriate size for gripping is attached to the bracket 40, and the bracket 40 is easily handled even in a narrow area by gripping the sheet 42A with the hand H1 as illustrated in FIG. 4, and the screwing work of the screw 41 with a screwdriver D is easily performed. In addition, in a place where there is a spatial margin, the bracket 40 is gripped with a hand H2 as illustrated in FIG. 4, so that the screw 41 is more stable and the work is easy. The bracket 40 has sufficient strength and is not deformed by screwing work of the screw 41.

The sheet 42A protrudes from the bracket 40 in the right direction opposite to the communication module 26, and the correct orientation of the bracket 40 can be intuitively understood, and it is possible to prevent the protruding portion 40cb from interfering with the module chassis 26b when assembled in reverse. During the screwing work of the screw 41, the bracket 40 is prevented from rotating by the protruding portion 40cb. Even after the screw 41 has been screwed in, even though the operator inadvertently applies a rotational force to the bracket 40, the bracket 40 does not rotate due to the presence of the protruding portion 40cb. In addition, since the sheet 42A is prevented from rotating by the protruding piece 40d, the sheet 42A can be maintained in the correct orientation, the shielded wire can be correctly identified by the identification symbol 45. The connecting portion 42b of the sheet 42A is in a state where the externally threaded portion of the screw 41 is screwed, thereby also serving as a falling-off prevention measure, which is a rational arrangement. The fixing structure 30 may be applied to other electronic modules such as the storage module 27.

Next, other examples applicable instead of the fixing part 31A will be described. In the following examples, the same components as those of the fixing part 31A are denoted by the same reference numerals, and detailed description thereof will be omitted.

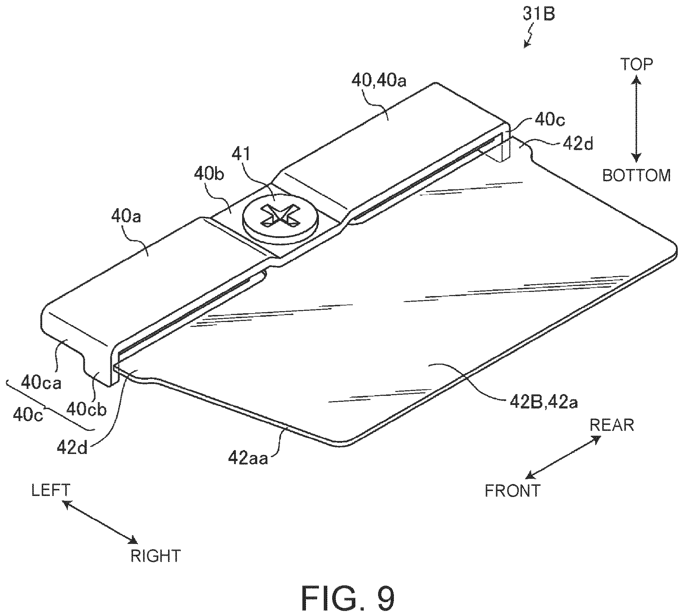

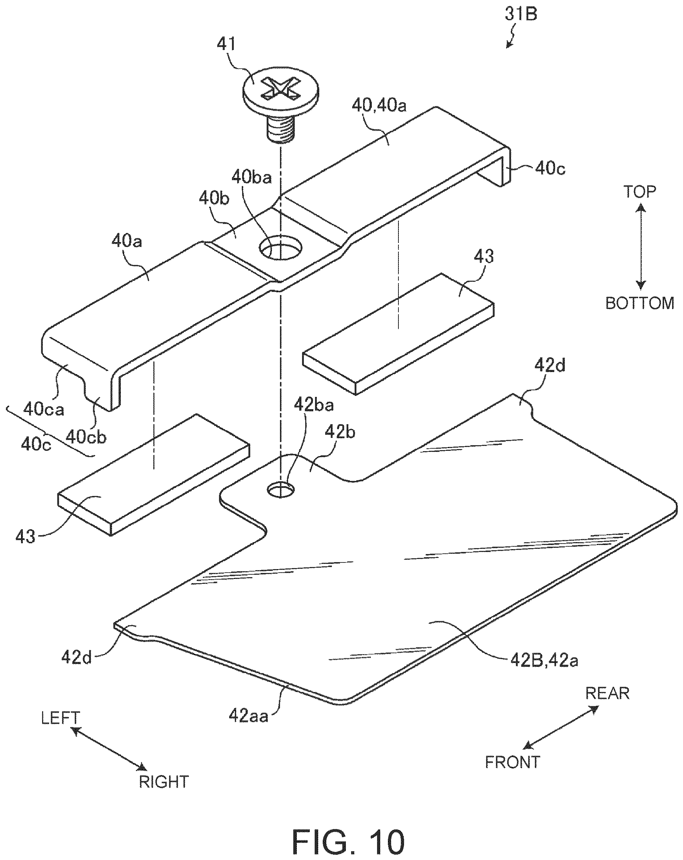

FIG. 9 is a perspective view of a fixing part 31B according to a second example. FIG. 10 is an exploded perspective view of the fixing part 31B. In the fixing part 31B, a sheet 42B is used instead of the sheet 42A. The sheet 42B has protrusions 42d formed on both front and rear ends of the gripping portion 42a on a side facing the bracket 40, and a front-rear width including the protrusions 42d is equal to that of the bracket 40. That is, the two protrusions 42d of the sheet 42B abut against the bent portions 40c of the bracket 40 to prevent relative rotation. The rotation stop of the sheet 42B is not limited to a protrusion shape, but it is sufficient as long as a part abuts against the bent portion 40c. The sheet 42B is easily formed because the above-described stepped portion 42c and the above-described rotation-preventing hole 42ca are not provided. The bracket of the second example does not have the protruding piece 40d.

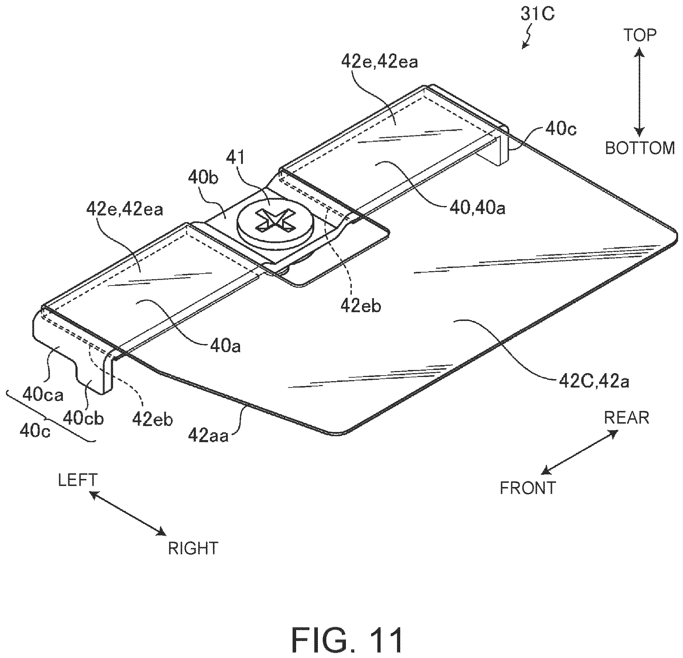

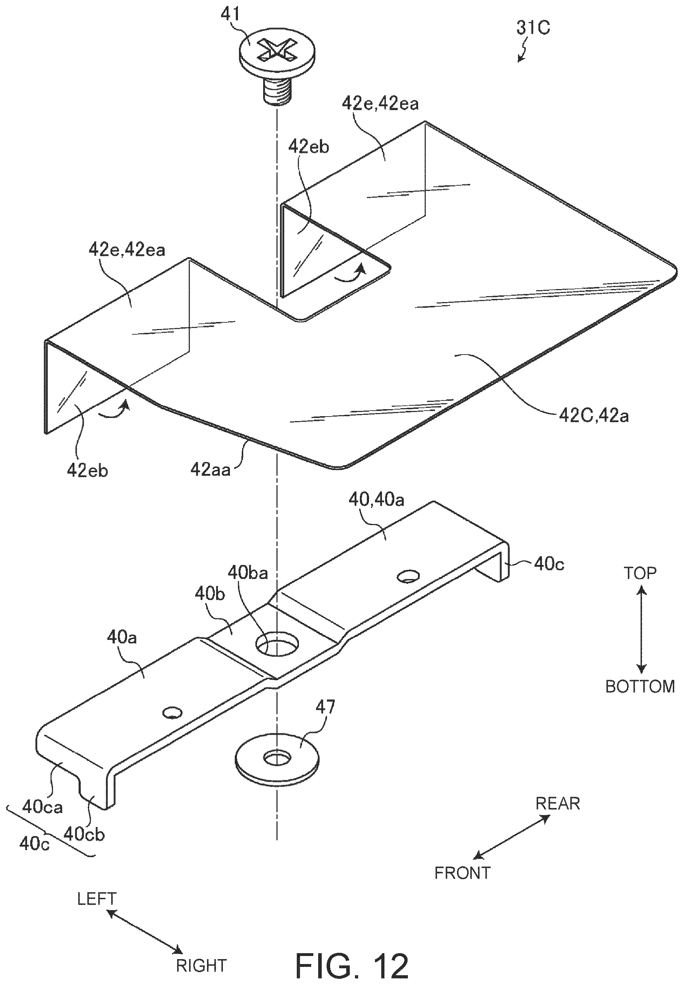

FIG. 11 is a perspective view of a fixing part 31C according to a third example. FIG. 12 is an exploded perspective view of the fixing part 31C. In the fixing part 31C, a sheet 42C is used instead of the sheet 42A. The sheet 42C is provided with two connecting portions 42e. The connecting portion 42b of the sheet 42A is provided at a position overlapping the recessed portion 40b, whereas the two connecting portions 42e overlap the flat portions 40a. A left-right width of the connecting portion 42e is set to be appropriately long, a right half 42ea of the connecting portion 42e is in contact with an upper surface of the flat portion 40a, a left half 42eb is folded back and is in contact with a lower surface of the flat portion 40a, and the left half 42eb and the right half 42ea are each fixed by a pressure-sensitive adhesive tape so that relative rotation is prevented. In the sheet 42C, the connecting portion 42e is fixed in contact with the flat portion 40a over a wide area, so that the gripping portion 42a can be stably and easily gripped, and also exhibits a rotation-preventing action. A falling-off prevention washer 47 is attached to the screw 41 on the lower surface side of the recessed portion 40b, and thus the screw 41 cannot fall off. The fixing part 31C is not provided with the conductive sponge 43.

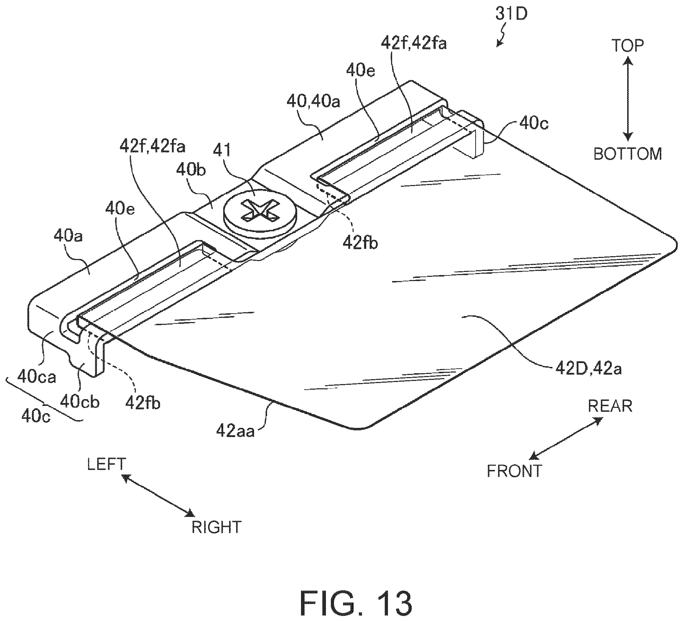

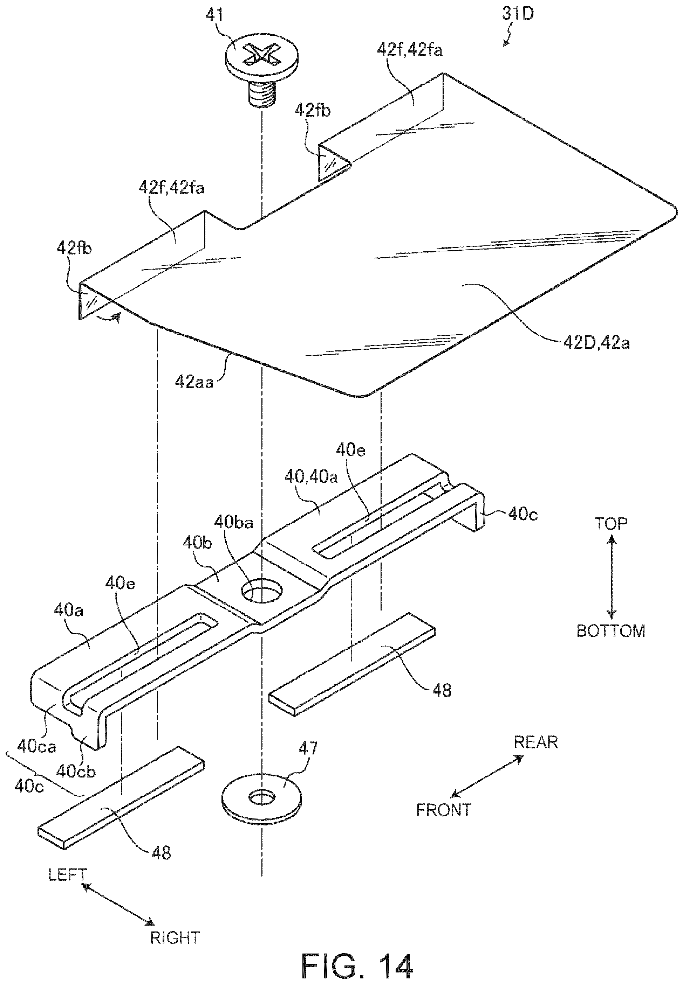

FIG. 13 is a perspective view of a fixing part 31D according to a fourth example. FIG. 14 is an exploded perspective view of the fixing part 31D. In the fixing part 31D, a sheet 42D is used instead of the sheet 42A. The sheet 42D is provided with two connecting portions 42f. The connecting portion 42f protrudes from the gripping portion 42a in the left direction as with the connecting portion 42e, but is slightly shorter than the connecting portion 42e. In the bracket 40 of the fourth example, slits 40e extending along the front-rear direction are formed in the flat portions 40a. A right half 42fa of the connecting portion 42f is in contact with an upper surface of the flat portion 40a on the right side of the slit 40e, and a left half 42eb is folded back through the slit 40e and is in contact with a lower surface on the right side of the slit 40e, and the right half 42fa and the left half 42eb are each fixed by a pressure-sensitive adhesive tape so that relative rotation is prevented. A conductive sponge 48 applied to the fixing part 31D has a smaller left-right width than the above-described conductive sponge 43 and is attached to the left lower surface of the slit 40e. In the fixing part 31D, since the connecting portion 42f is fixed to the bracket 40 over an appropriately large area, the gripping portion 42a is stable, and the conductive sponge 48 exhibits the same action as the conductive sponge 43.

The present invention is not limited to the above-described embodiment, and there is no doubt that the present invention can be freely changed without departing from the gist of the present invention.

### Description of Symbols

10 electronic apparatus
12 chassis
12b cover material (conductive cover)
16 hinge
21 substrate
26 communication module (electronic module)
26a module substrate
26b module chassis
26c terminal plate
26d connection terminal
26e semicircular notch
30 fixing structure
31A, 31B, 31C, 31D fixing part
34 boss
35a, 35b, 35c, 35d, 35e, 35f terminal block
36a, 36b, 36c, 36d shielded wire
37 head portion
40 bracket
40ba screw hole
40c bent portion
40ca terminal plate placement portion
40d protruding piece
41 screw
42A, 42B, 42C, 42D sheet
42a gripping portion
42b, 42e, 42f connecting portion
42ba screw hole
42c stepped portion
42ca rotation-preventing hole
42d protrusion
43, 48 conductive sponge (first conductive elastic body)
44 conductive sponge (second conductive elastic body)
45, 45aa, 45ab, 45ac, 45ad, 45ba, 45bb, 45bc, 45bd, 45ca, 45cb identification symbol

## Claims

1. An electronic apparatus comprising:
a substrate; and
an electronic module fixed to the substrate,
wherein the electronic apparatus comprises
a bracket arranged along an edge portion of the electronic module,
a screw that is rotatably provided on the bracket and configured to fix the edge portion of the electronic module to the substrate, and
a sheet that protrudes from the bracket to a side opposite to the electronic module.

2. The electronic apparatus according to claim 1,
wherein a plurality of terminal blocks is formed along the edge portion of the electronic module,
detachable electric wires are connected to at least two of the plurality of terminal blocks, and
the sheet is transparent and comprises identification symbols that are able to be matched with the electric wires at positions overlapping the electric wires.

3. The electronic apparatus according to claim 2,
wherein, in accordance with a type of the electronic module, a symbol indicating the type and the identification symbols are provided in a plurality of rows on the sheet.

4. The electronic apparatus according to claim 2 or claim 3, further comprising:
a conductive cover configured to cover the substrate and the electronic module,
wherein the bracket is made of a conductive material,
the electric wires are shielded wires, and the head portions of the electric wires that are connected to the terminal block are in electrical conduction with a shield, and
the electronic apparatus comprises
a first conductive elastic body that is sandwiched between the head portion and the bracket, and
a second conductive elastic body that is sandwiched between the bracket and the conductive cover.

5. The electronic apparatus according to any preceding claim,
wherein relative rotation between the bracket and the sheet is prevented.

6. The electronic apparatus according to claim 5,
wherein the sheet comprises
a gripping portion that protrudes from the bracket to the side opposite to the electronic module,
a connecting portion that overlaps the bracket, and
a stepped portion that is provided between the gripping portion and the connecting portion and in which a rotation-preventing hole is formed,
the bracket comprises a protruding piece that protrudes to the side opposite to the electronic module, and
the protruding piece fits into the rotation-preventing hole to prevent the relative rotation between the bracket and the sheet.

7. The electronic apparatus according to any preceding claim,
wherein an externally threaded portion of the screw is in a state of being screwed into a screw hole of a connecting portion of the sheet that overlaps the bracket.

8. The electronic apparatus according to any preceding claim,
wherein the electronic module is a communication module.

9. A fixing structure for fixing an electronic module to a substrate, the fixing structure comprising:
a bracket arrangeable along an edge portion of the electronic module;
a screw that is rotatably provided on the bracket and configured to fix the edge portion of the electronic module to the substrate; and
a sheet that protrudes from the bracket to a side opposite to the electronic module.
